# EUROPÄISCHE PATENTSCHRIFT

(11) **EP 2 508 407 B1**
(45) Veröffentlichungstag und Bekanntmachung des Hinweises auf die Patenterteilung: **24.04.2013**
(21) Anmeldenummer: 12162185.8
(22) Anmeldetag: 29.03.2012
(51) Int. Cl.: B61D 37/00

(54) **Gerüst, insbesondere für elektrische Einrichtungen in einem Schienenfahrzeug, und Verfahren zur Herstellung des Gerüsts**
Frame, in particular for electrical devices in a rail vehicle and method for producing the frame
Structure, en particulier pour les installations électriques dans un véhicule sur rail, et procédé de fabrication de cette structure

(30) Priorität: 04.04.2011 DE 102011006744
(43) Veröffentlichungstag der Anmeldung: 10.10.2012
(73) Patentinhaber: Bombardier Transportation GmbH, 10785 Berlin (DE)
(72) Erfinder: Wolf, Martin, 68526 Ladenburg (DE)
(74) Vertreter: Patentanwälte Bressel und Partner

(56) Entgegenhaltungen:
- DE-A1-102004 038 653
- DE-A1-102005 057 542
- DE-C1- 10 120 738
- DE-U1-202006 014 046
- US-A- 5 025 734

## Beschreibung

Die Erfindung betrifft ein Gerüst, insbesondere für elektrische Einrichtungen in einem Schienenfahrzeug. Die Erfindung betrifft ferner ein Verfahren zur Herstellung eines solchen Gerüsts.

Insbesondere aus dem Bau von Lokomotiven für Schienenfahrzeuge ist es bekannt, elektrische Einrichtungen wie elektrische Verteiler, Stromrichter und elektrische Hilfsbetriebe, die nicht unmittelbar der Traktion des Schienenfahrzeugs dienen, im Maschinenraum anzuordnen. Dabei werden die elektrischen Einrichtungen von einer tragenden Konstruktion getragen, die ein Gerüst meist aus langgestreckten Metallprofilelementen aufweist. Die Profilelemente nehmen die Gewichtskräfte der elektrischen Einrichtungen auf, leiten die Gewichtskräfte auf tragende Teile des Wagenkastens des Schienenfahrzeugs ab und bilden dabei eine stabile Konstruktion, die Brems-, Beschleunigungs- und Stoßkräften widersteht, welche beim Fahrbetrieb des Schienenfahrzeugs auftreten.

Bisher wurden solche Gerüste meist durch Verschweißen der langgestreckten Metallprofilelemente hergestellt. Schweißarbeiten erfordern aber meist Nacharbeiten, um den Korrosionsschutz zu gewährleisten und die Folgen von Schweißverzug zu beseitigen. Auch ist das Schweißen aufwendig und darf nur von speziell geschultem Fachpersonal ausgeführt werden.

Andererseits sind Schweißkonstruktionen aber sehr stabil bezüglich der Dauerhaftigkeit und Zuverlässigkeit der Verbindungen an den Gerüstecken, an denen insbesondere im Fall eines quaderförmigen Gerüsts drei langgesteckte Profilelemente zusammenlaufen und miteinander verbunden sind.

Wenn auf ein Verschweißen der langgestreckten Profilelemente im Bereich der Gerüstecken ganz oder teilweise verzichtet wird, können zusätzliche Elemente verwendet werden, um die Konstruktion an den Ecken zu verstärken. Dies führt jedoch zu einer Erhöhung des Gewichts.

Ein weiteres Problem stellt die Befestigung des Gerüsts an Gegenständen in seiner Umgebung, z.B. dem Wagenkastenboden oder der Wagenkastenseitenwand des Schienenfahrzeugs dar. Zur Befestigung sind z.B. Ösen oder Aussparungen erforderlich, die üblicherweise an weiteren zusätzlichen Bauteilen des Gerüsts ausgebildet sind. Dadurch entsteht Aufwand für die Befestigung der zusätzlichen Bauteile an den anderen Teilen des Gerüsts und das Gewicht wird erhöht.

Es ist eine Aufgabe der vorliegenden Erfindung, ein Gerüst und ein Verfahren zur Herstellung eines Gerüsts anzugeben, insbesondere ein Gerüst für elektrische Einrichtungen in einem Schienenfahrzeug, die bei möglichst geringem Aufwand für die Herstellung des Gerüsts und bei geringem Gewicht des Gerüsts eine stabile Konstruktion insbesondere an den Gerüstecken gewährleisten. Dabei soll auf Schweißverbindungen zwischen langgestreckten Profilelementen des Gerüsts verzichtet werden können.

DE 10 2004 038 653 A1 beschreibt ein Gerüst zum Halten von Geräten, insbesondere in einem Eisenbahnfahrzeug, wobei Holme die Kanten eines Quaders bilden und jeweils drei Holme an einer Ecke des Quaders aneinander gefügt sind. Es ist vorgesehen, dass die Holme über Eckverbindungsteile miteinander verbunden sind. In Fig. 2 der Druckschrift und der zugehörigen Beschreibung wird offenbart, dass ein einstückiges Eckverbindungsteil drei Laschen aufweist, die alle senkrecht aufeinander stehen. Das Eckverbindungsteil ist dadurch in der Ecke jeweils über eine Lasche an die von der Ecke ausgehenden Holme angepasst. Zur Befestigung des Eckverbindungsteils an den Holmen dienen Nieten.

Gemäß einem Grundgedanken der vorliegenden Erfindung wird zumindest an einer Ecke des Gerüsts, an der drei langgestreckte Profilelemente des Gerüsts miteinander verbunden sind bzw. miteinander zu verbinden sind, ein zusätzliches Bauelement vorgesehen, das gleichzeitig für die Verbindung von zumindest zwei der langgestreckten Profilelemente miteinander und für die Befestigung des Gerüsts an zumindest einen Gegenstand in der Umgebung des Gerüsts verwendet wird. Dadurch kann einerseits die Stabilität der Gerüstecke gewährleistet werden und andererseits eine Befestigungsmöglichkeit an einer besonders stabilen Stelle des Gerüsts geschaffen werden. Ferner ist der Aufwand zur Herstellung einer solchen Gerüstecke gering. Die Gerüstecke kann z.B. am unteren Ende des Gerüsts liegen und z.B. mit dem Boden eines Wagenkastens verbunden werden. Die Ecke kann z. B. aber auch oben am Gerüst liegen und eine Befestigung mit benachbarten Schränken oder Gerüsten oder einer Wagenkasten-Seitenwand ermöglichen.

Insbesondere wird ein Gerüst vorgeschlagen, wobei:
- das Gerüst eine Mehrzahl von langgestreckten Profilelementen aufweist,
- die Profilelemente eine tragfähige Konstruktion, insbesondere für die elektrischen Einrichtungen, bilden,
- an Ecken des Gerüsts jeweils zumindest drei der Profilelemente miteinander verbunden sind,
- die drei Profilelemente an zumindest einer der Ecken des Gerüsts über zumindest ein erstes und ein zweites Verbindungselement miteinander verbunden sind,
- das erste Verbindungselement am Endbereich eines ersten der drei Profilelemente befestigt ist und sich ausgehend von dem Endbereich des ersten Profilelements entlang der Oberfläche zumindest eines anderen der Profilelemente erstreckt, d.h. sich entlang der Oberfläche des zweiten und/oder dritten Profilelements erstreckt,
- das zweite Verbindungselement mit dem zweiten und dritten Profilelement und mit dem ersten Verbindungselement verbunden ist und
- das erste und/oder zweite Verbindungselement als Befestigungselement zur Befestigung des Gerüsts mit einem anderen Gegenstand ausgestaltet ist, insbesondere zur Befestigung des Gerüsts über das erste und/oder zweite Verbindungselement an tragenden Teilen des Schienenfahrzeugs.

Ferner wird ein Verfahren zum Herstellen eines Gerüsts vorgeschlagen, insbesondere eines Gerüsts für elektrische Einrichtungen in einem Schienenfahrzeug, mit folgenden Schritten:
- Bereitstellen einer Mehrzahl von langgestreckten Profilelementen,
- Bilden einer tragfähigen Konstruktion, insbesondere für die elektrischen Einrichtungen, aus den Profilelementen,
- Verbinden von jeweils zumindest drei der Profilelemente an Ecken des Gerüsts miteinander, wobei die drei Profilelemente an zumindest einer der Ecken des Gerüsts über zumindest ein erstes und ein zweites Verbindungselement miteinander verbunden werden,
- Befestigen des ersten Verbindungselements am Endbereich eines ersten der drei Profilelemente, sodass sich das erste Verbindungselement ausgehend von dem Endbereich des ersten Profilelements entlang der Oberfläche zumindest eines anderen der Profilelemente erstreckt, d.h. sich entlang der Oberfläche des zweiten und/oder dritten Profilelements erstreckt,
- Verbinden des zweiten Verbindungselements mit dem zweiten und dritten Profilelement,
- Verbinden des zweiten Verbindungselements mit dem ersten Verbindungselement
   und
- Ausgestalten des ersten und/oder zweiten Verbindungselements als Befestigungselement zur Befestigung des Gerüsts mit einem anderen Gegenstand, insbesondere zur Befestigung des Gerüsts über das erste und/oder zweite Verbindungselement an tragenden Teilen des Schienenfahrzeugs.

Die obige Reihenfolge der Verfahrensschritte bedeutet nicht, dass die Verfahrensschritte in dieser Reihenfolge ausgeführt werden müssen. Insbesondere kann es sich bei den langgestreckten Profilelementen um Profilelemente aus galvanisch beschichtetem Stahl handeln. Die Profilelemente können z.B. durch Abkanten von Blechen hergestellt werden. An den Profilelementen können z.B. Löcher und/oder Aussparungen vorgesehen werden oder vorgesehen sein, um Teile und Einrichtungen daran zu befestigen, die von dem Gerüst getragen werden sollen.

Insbesondere bei der Verbindung des ersten Verbindungselements am Endbereich des ersten Profilelements, bei der Verbindung des zweiten Verbindungselements mit dem zweiten und dritten Profilelement und bei der Verbindung des zweiten Verbindungselements mit dem ersten Verbindungselement kann es sich um Nietverbindungen (insbesondere mit Blindnieten) handeln. Vorzugsweise sind jedoch auch die im Folgenden genannten Verbindungen zwischen den Verbindungselementen untereinander und mit den Profilelementen Nietverbindungen.

Nietverbindungen werden bevorzugt, da ein Verschweißen der Elemente dadurch vermieden werden kann und andererseits - im Vergleich zu Verschraubungen - die dauerhafte Festigkeit der Verbindung gewährleistet ist. Auch sind Nietverbindungen mit dem geeigneten Werkzeug schnell herstellbar.

Im Fall von Nietverbindungen wird es ferner bevorzugt, dass die miteinander verbundenen bzw. miteinander zu verbindenden Elemente galvanisch beschichtete Metallelemente sind, die insbesondere sämtlich aus galvanisch beschichteten Blechen hergestellt werden können. Dies vermeidet weiteren Aufwand für Korrosionsschutz. Die Bleche können an für die Nietverbindung erforderlichen Stellen ausgestanzt werden, so dass sich entsprechende Durchgangslöcher ergeben. Nietverbindungen von galvanisch beschichteten Metallbauteilen stellen gleichzeitig eine gute elektrische Verbindung dar, so dass die einzelnen Elemente des Gerüsts nicht separat geerdet werden müssen.

Für ein Gerüst, das zum Tragen von elektrischen Einrichtungen eines Schienenfahrzeugs verwendet wird, können z.B. Stahlbleche mit einer Dicke von 2 mm oder größer verwendet werden, wobei die Stahlbleche bereits vor dem Abkanten zur Herstellung der Profilelemente und/oder Befestigungselemente galvanisch beschichteten worden sind. Je nach Blechdicke können die Profile und/oder Verbindungselemente nach dem Abkanten, d.h. nach ihrer Herstellung, nachbearbeitet werden, indem sie z.B. galvanisch beschichtet werden.

Wie erwähnt erstreckt sich das erste Verbindungselement ausgehend von dem Endbereich des ersten Profilelements entlang der Oberfläche zumindest eines anderen der Profilelemente. Insbesondere kann es sich bei dem ersten Profilelement um ein sich in vertikaler Richtung oder zumindest von unten nach oben erstreckendes Profilelement handeln und erstreckt sich das erste Verbindungselement in diesem Fall vorzugsweise ebenfalls von unten nach oben entlang der Oberfläche des zweiten und/oder dritten Profilelements. Dabei wird es ferner bevorzugt, dass sich das erste Verbindungselement ausgehend von dem Endbereich des ersten Profilelements entlang der Oberfläche des zweiten und/oder dritten Profilelements bis zu einem Befestigungsbereich erstreckt, der ein Bereich des ersten Verbindungselements ist, in dem das erste Verbindungselement als Befestigungselement zur Befestigung des Gerüsts ausgestaltet ist. In diesem Befestigungsbereich kann sich z.B. zumindest eine Durchgangsöffnung und/oder zumindest eine Aussparung befinden, die nicht zur Verbindung von Teilen des Gerüsts untereinander vorgesehen ist, sondern zur Befestigung des gesamten Gerüsts an einem Gegenstand in seiner Umgebung. Der Befestigungsbereich kann sich insbesondere unterhalb sämtlicher Profilelemente des Gerüsts befinden, wenn er der Befestigung des Gerüsts an einem Boden dient. Alternativ kann sich der Befestigungsbereich oberhalb sämtlicher Profilelemente des Gerüsts befinden, wenn der Befestigungsbereich dazu dient, das Gerüst an seiner Oberseite zu befestigen. Ein solcher Befestigungsbereich kann auch dazu genutzt werden, das Gerüst an einem Kran aufzuhängen und an den vorgesehenen Standort des Gerüsts zu transportieren.

Bevorzugt wird es, dass an verschiedenen Ecken des Gerüsts, die jeweils in der erfindungsgemäßen Weise ausgestaltet sind/werden, jeweils ein Befestigungsbereich an einem ersten Verbindungselement vorgesehen ist/wird.

Vorzugsweise ist das erste Verbindungselement im Bereich der Oberfläche des zweiten und/oder dritten Profilelements, an der sich das erste Verbindungselement entlang erstreckt, mit dem zweiten und/oder dritten Profilelement verbunden bzw. wird verbunden.

Dadurch erhöht sich die Stabilität hinsichtlich der Befestigung des gesamten Gerüsts. Außerdem dient das erste Verbindungselement der Verbindung des ersten Profilelements mit dem zweiten und/oder dritten Profilelement.

Insbesondere können zwei der ersten Verbindungselemente vorgesehen sein/werden, die am Endbereich eines ersten der drei Profilelemente befestigt sind/werden und sich ausgehend von dem Endbereich des ersten Profilelements entlang der Oberfläche des zweiten und/oder dritten Profilelements erstrecken, wobei das zweite Verbindungselement mit beiden ersten Verbindungselementen verbunden ist/wird. Durch zwei erste Verbindungselemente wird insbesondere die Herstellung der ersten Verbindungselemente erleichtert. Dies ist bei komplexen Formen von Vorteil, die beispielsweise dann erforderlich sind, wenn der Befestigungsbereich der ersten Verbindungselemente gegenüber der durch die Längserstreckung des ersten Profilelements definierte Längsachse versetzt angeordnet ist. Außerdem kann die Stabilität der Befestigung des Gerüsts über zwei erste Verbindungselemente größer sein als mit lediglich einem ersten Verbindungselement. Dabei wird es bevorzugt, dass Befestigungsbereiche der beiden ersten Verbindungselemente aneinander anliegen, so dass mit demselben Befestigungsmittel beide Befestigungsbereiche an einem Gegenstand in der Umgebung des Gerüsts befestigt werden können.

Bei einer alternativen Ausgestaltung ist ein einziges erstes Verbindungselement vorhanden, das an zwei gegeneinander abgewinkelten Oberflächenbereichen des ersten Profilelements anliegt und jeweils an den beiden Oberflächenbereichen mit dem ersten Profilelement verbunden ist, insbesondere vernietet ist. Dadurch wird eine sehr stabile Befestigung des ersten Verbindungselements mit dem ersten Profilelement erzielt.

Das zweite Verbindungselement ist/wird bevorzugter Maßen über einen plattenförmigen Bereich des ersten Verbindungselements mit dem zweiten oder dritten Profilelement verbunden. Insbesondere bei einer Nietverbindung erstrecken sich die Niete somit von dem zweiten Verbindungselement durch den plattenförmigen Bereich hindurch zu dem zweiten oder dritten Profilelement.

Im Fall der zwei ersten Verbindungselemente ist das zweite Verbindungselement vorzugsweise über jeweils einen plattenförmigen Bereich der beiden ersten Verbindungselemente mit dem zweiten bzw. dritten Profilelement verbunden. Im Fall eines einzigen ersten Verbindungselements ist das zweite Verbindungselement vorzugsweise über einen ersten plattenförmigen Bereich des ersten Verbindungselements mit dem zweiten Profilelement verbunden und über einen zweiten plattenförmigen Bereich des ersten Verbindungselements mit dem dritten Profilelement verbunden. In beiden Fällen wird es bevorzugt, dass das zweite Verbindungselement zwei gegeneinander abgewinkelte Bereiche aufweist, wobei der eine Bereich mit dem zweiten Profilelement und der andere Bereich mit dem dritten Profilelement verbunden ist. Durch die abgewinkelte Konstruktion des zweiten Verbindungselements wird die Stabilität erhöht. Durch die Verbindung des zweiten Verbindungselements mit sowohl dem zweiten als auch dem dritten Profilelement wird außerdem eine stabile Verbindung dieser beiden Profilelemente geschaffen.

Ferner wird ein Schienenfahrzeug, insbesondere eine Lokomotive oder ein Triebfahrzeug, vorgeschlagen, das ein Gerüst in einer der Ausgestaltungen aufweist, die in dieser Beschreibung beschrieben werden. Dabei werden elektrische Einrichtungen des Schienenfahrzeugs von dem Gerüst getragen.

Ferner wird ein Verfahren zum Herstellen und Montieren eines Gerüsts in einer der Ausgestaltungen dieser Beschreibung vorgeschlagen, wobei das Gerüst über das erste und/oder zweite Verbindungselement mit tragenden Teilen eines Wagenkastens des Schienenfahrzeugs verbunden wird.

Das erfindungsgemäße Gerüst ist besonders gut für den Einsatz in Schienenfahrzeugen, insbesondere Lokomotiven oder Triebfahrzeugen, geeignet. Die stabile und dennoch - trotz Verzicht auf ein Verschweißen - verhältnismäßig leichte Konstruktion kann in einfacher Weise an tragenden Teilen des Schienenfahrzeugs befestigt werden und ist im Fall der bevorzugten Nietverbindungen vibrationsdämpfend.

Ausführungsbeispiele der Erfindung werden nun unter Bezugnahme auf die beigefügte Zeichnung beschrieben. Die einzelnen Figuren der Zeichnung zeigen:
- Fig. 1: eine bevorzugte Ausgestaltung einer Gerüstecke,
- Fig. 2: eine Ansicht auf die Gerüstecke gemäß Fig. 1, bezogen auf die Darstellung in Fig. 1 von links vorne mit Blickrichtung parallel zur Längsachse des zweiten Profilelements,
- Fig. 3: eine weitere Ansicht auf die in Fig. 1 dargestellte Gerüstecke, bezogen auf die Darstellung in Fig. 1 von hinten mit Blickrichtung in Verlängerung der Längsachse des dritten Profilelements,
- Fig. 4: eine Ansicht auf die Gerüstecke gemäß Fig. 1, bezogen auf die Darstellung in Fig. 1 von hinten mit Blickrichtung parallel zur Längsachse des zweiten Profilelements,
- Fig. 5: eine weitere Ansicht der Gerüstecke aus Fig. 1, mit Blickrichtung von rechts vorne parallel zur Längsrichtung des dritten Profilelements,
- Fig. 6: ein erstes Verbindungselement der Gerüstecke gemäß Fig. 1 bis Fig. 5,
- Fig. 7: ein weiteres erstes Verbindungselement der Gerüstecke gemäß Fig. 1 bis Fig. 5,
- Fig. 8: ein zweites Verbindungselement der Gerüstecke gemäß Fig. 1 bis Fig. 5,
- Fig. 9: eine Ansicht von oben auf die in Fig. 1 dargestellte Gerüstecke, mit Blickrichtung parallel zur Längsachse des ersten Profilelements,

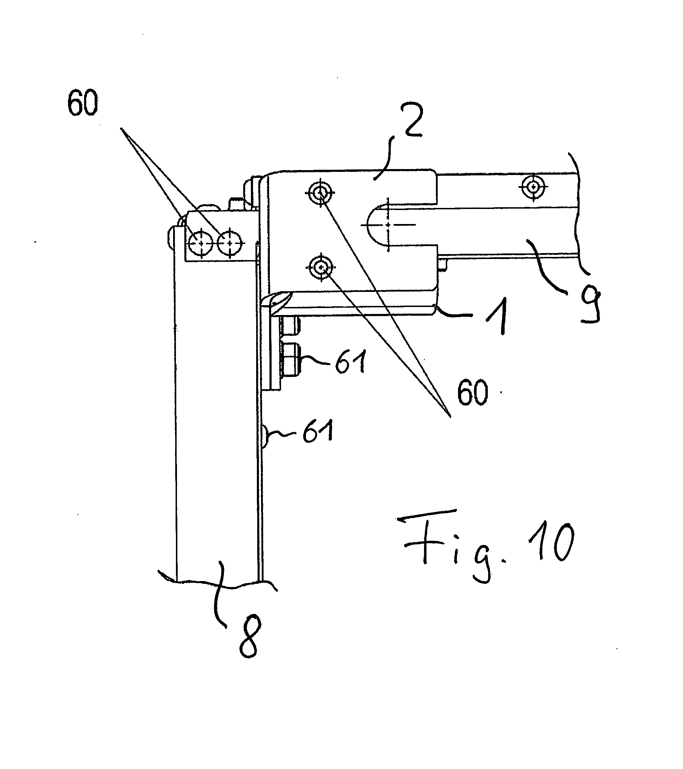

- Fig. 10: eine Ansicht von unten auf die in Fig. 1 dargestellte Gerüstecke, ebenfalls, wie in Fig. 9, mit Blickrichtung parallel zur Längsachse des ersten Profilelements, jedoch in entgegengesetzter Blickrichtung im Vergleich zu Fig. 9,
- Fig. 11: einen Teil des zweiten Profilelements, der in der Darstellung von Fig. 1 die Oberseite und Vorderseite des zweiten Profilelements bildet,
- Fig. 12: einen zweiten Teil des zweiten Profilelements der in Fig. 1 dargestellten Gerüstecke, wobei der zweite Teil in der Darstellung der Fig. 1 die Unterseite und Hinterseite des zweiten Profilelements bildet,
- Fig. 13: eine Alternative zu den in Fig. 6 und Fig. 7 dargestellten ersten Verbindungselementen für die Ausgestaltung einer modifizierten Gerüstecke,
- Fig. 14: eine Draufsicht von oben auf das in Fig. 13 dargestellte erste Verbindungselement,
- Fig. 15: ein Gerüst mit vier Gerüstecken im unteren Teil des Gerüsts, die in der Art von Fig. 1 ausgestaltet sind, und mit vier Gerüstecken im oberen Teil des Gerüsts, die unter Verwendung des in Fig. 13 und Fig. 14 dargestellten ersten Verbindungselements hergestellt worden sind, und
- Fig. 16: ein Gerüst, das an anderen Gegenständen in einem Schienenfahrzeug befestigt ist.

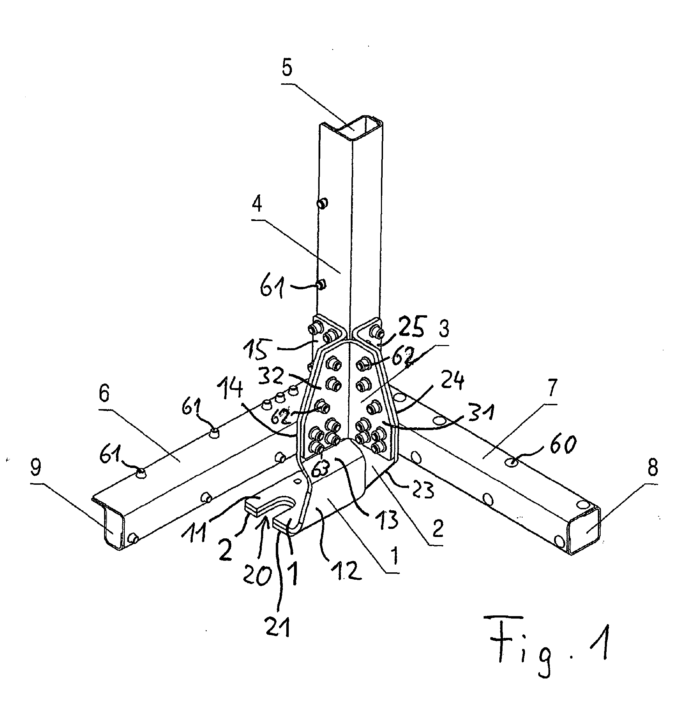

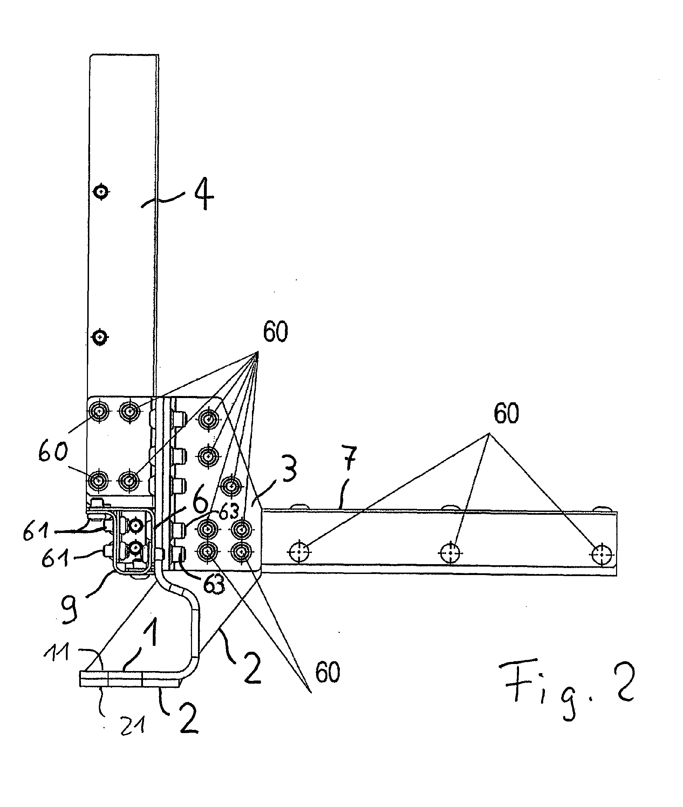

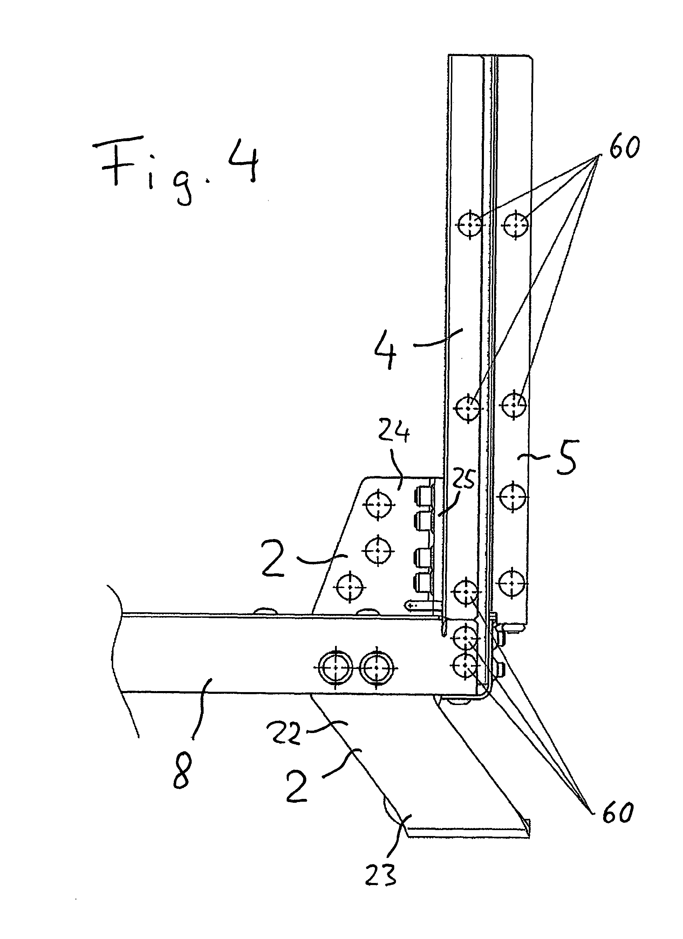

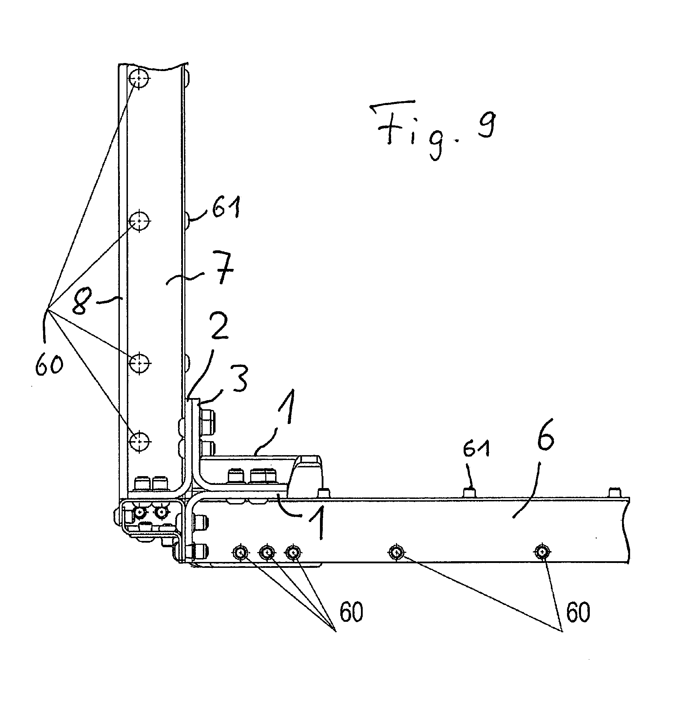

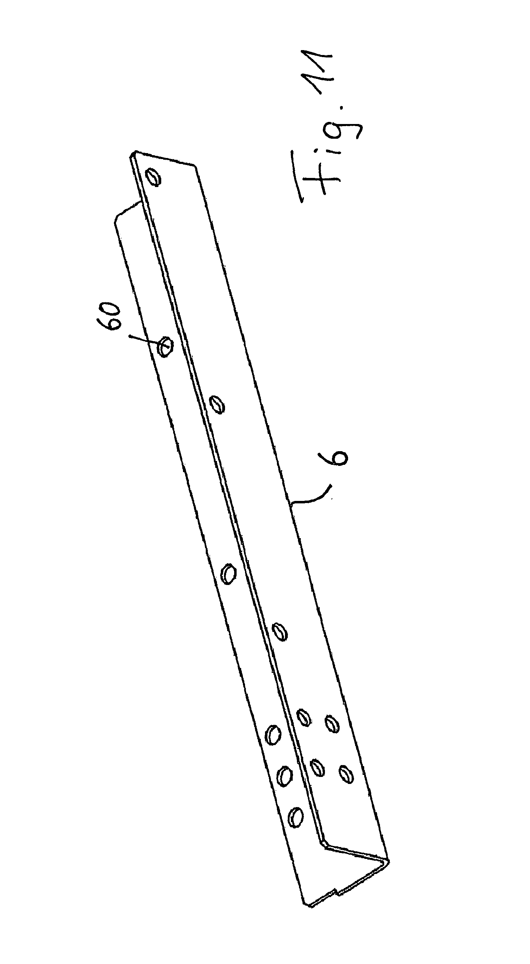

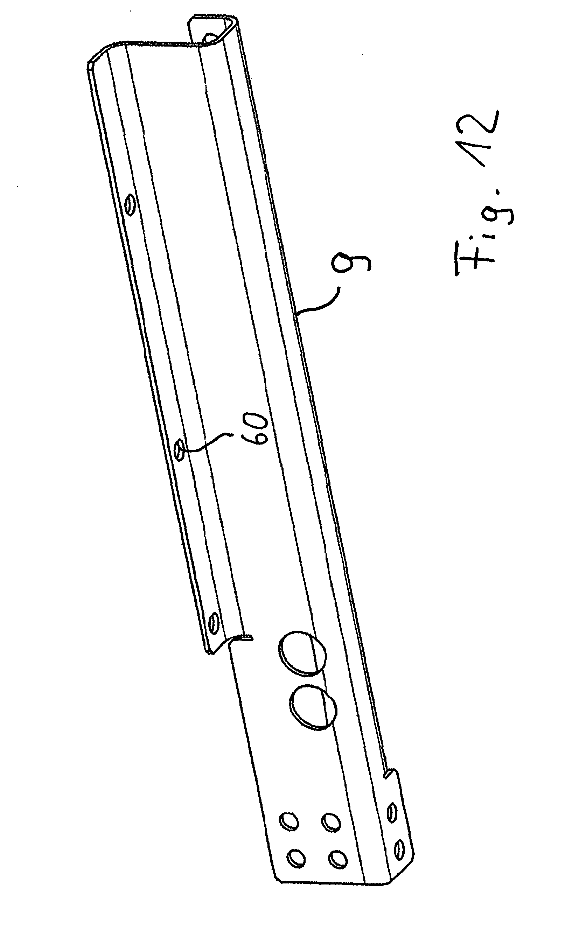

Die in Fig. 1 dargestellte Gerüstecke weist die Endbereiche von drei langgestreckten Profilelementen auf, die über Verbindungselemente miteinander verbunden sind. Die Profilelemente sind dabei nicht in ihrer vollen Länge dargestellt, sondern abgeschnitten dargestellt. Man erkennt lediglich jeweils einen kurzen Längsabschnitt mit dem Endbereich. Entsprechendes gilt für die Darstellungen in Fig. 2 bis Fig. 5 und Fig. 9. Auch die in Fig. 11 und Fig. 12 dargestellten Teile des zweiten Profilelements sind lediglich in einer Länge dargestellt, die der in Fig. 1 bis Fig. 5 dargestellten Länge entspricht.

Das erste Profilelement 4, 5 erstreckt sich in der perspektivischen Darstellung der Fig. 1 von unten nach oben. An seinem unteren Ende befindet sich der Endbereich, mit dem das erste Profilelement 4, 5 mit dem zweiten Profilelement 6, 9 und mit dem dritten Profilelement 7, 8 verbunden ist.

Das erste Profilelement 4, 5 ist wie auch das zweite Profilelement 6, 9 und das dritte Profilelement 7, 8 in dem Ausführungsbeispiel aus zwei Teilen zusammengesetzt. Die verwendeten Bezugsziffern bezeichnen die beiden Teile. Für das zweite Profilelement 6, 9 sind die Einzelteile in Fig. 11 und Fig. 12 dargestellt.

Die Erfindung ist jedoch nicht darauf beschränkt, dass die Profilelemente aus zwei oder mehreren Teilen zusammengesetzt sind. Z.B. könnte anstelle zumindest eines rohrförmigen Profilelements (wie in Fig. 1) auch ein nicht rohrförmiges Profilelement als tragendes Element für das Gerüst verwendet werden. Rohrförmige Profilelemente haben jedoch den Vorteil, dass sie bei gleicher Materialdicke stabiler sind. Wenn zumindest eines der Profilelemente aus zwei Teilen zusammengesetzt ist, wird es bevorzugt, dass die Verbindungselemente oder das Verbindungselement zum Verbinden der Profilelemente miteinander mit zumindest zwei Teilen desselben Profilelements verbunden sind/ist. Insbesondere können beide Teile 6, 9 jeweils eine Durchgangsöffnung haben, wobei die Durchgangsöffnungen miteinander und mit einer weiteren Durchgangsöffnung in dem Verbindungselement fluchtend ausgerichtet sind und ein einziger Niet sich durch die drei miteinander fluchtenden Durchgangsöffnungen hindurcherstreckt. Dies ist z.B. links unten in Fig. 2 bei einem mit 63 bezeichneten Niet der Fall.

In den Figuren sind noch weitere Niete dargestellt, die sich durch miteinander fluchtende Durchgangsöffnungen in miteinander zu verbindenden Teilen hindurcherstrecken und die Teile auf diese Weise aneinander fixieren. Einige von diesen anderen Nieten sind mit dem Bezugszeichen 61 bezeichnet. Weitere andere Nieten, über die das zweite Verbindungselement 3 mit den Verbindungselementen 1, 2 verbunden ist, sind mit 62 bezeichnet. Einige Durchgangsöffnungen sind mit dem Bezugszeichen 60 bezeichnet.

Bei der in Fig. 1 bis Fig. 5 gezeigten Ausführungsform sind zwei erste Verbindungselemente 1, 2 vorgesehen, die jeweils am Endbereich des ersten langgestreckten Profilelements 4, 5 angenietet sind. Dabei ist das eine erste Verbindungselement 1 mit einem Bereich 15 an einer ersten Oberfläche des ersten Profilelements 4, 5 anliegend vernietet und ist das andere erste Verbindungselement 2 mit einem Bereich 25 an einer zweiten Oberfläche des ersten Profilelements 4, 5 anliegend vernietet, wobei die beiden genannten Oberflächen des ersten Profilelements 4, 5 gegeneinander abgewinkelt verlaufen.

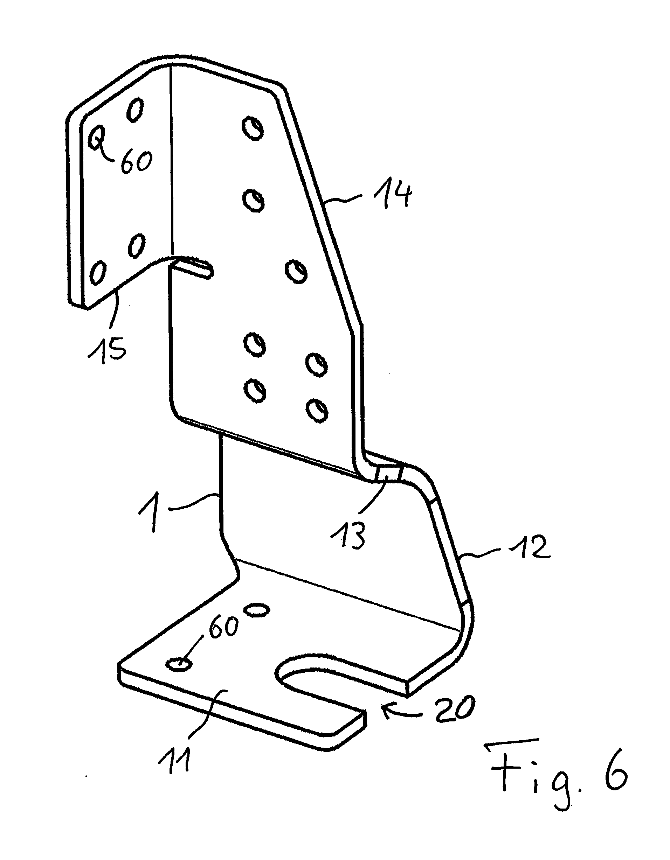

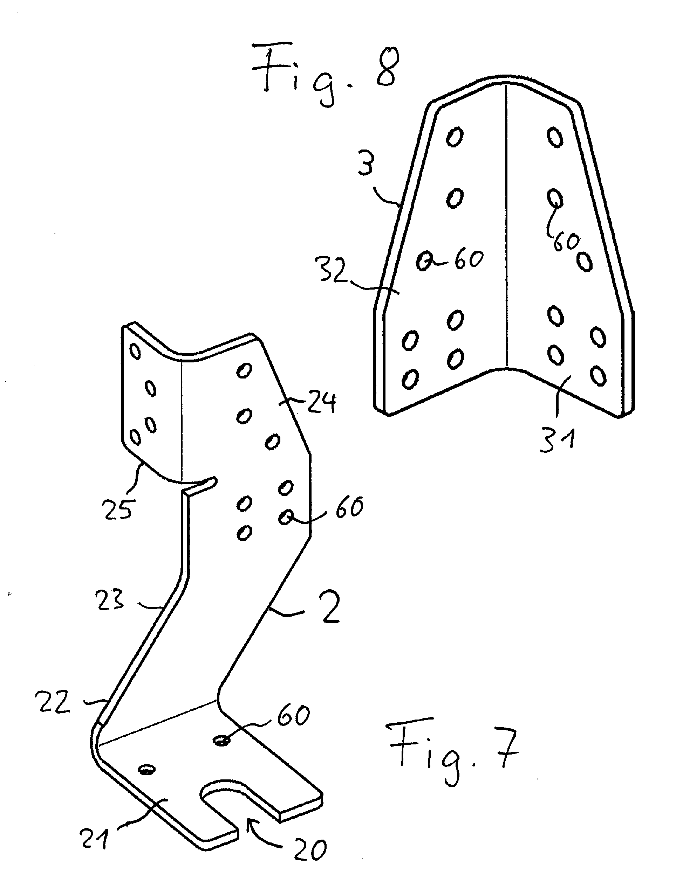

Wie die Fig. 6 und 7 zeigen, sind die ersten Verbindungselemente 1, 2 plattenförmig ausgestaltet, wobei verschiedene Bereiche durch Abkanten eines Blechteils hergestellt wurden. Das in Fig. 6 dargestellte erste Verbindungselement 1 weist den bereits genannten Bereich 15 auf, mit dem es an dem ersten Profilelement 4, 5 befestigt wird. Abgewinkelt zu dem Bereich 15 verläuft ein Bereich 14 von oben nach unten, der in einen schräg nach unten verlaufenden Bereich 13 übergeht. Dieser Bereich 13 wiederum geht in einen ebenfalls schräg nach unten verlaufenden Bereich 12 über, der jedoch steiler abfällt als der Bereich 13. Der Bereich 12 geht in den Befestigungsbereich 11 über, mit dem das erste Verbindungselement 1 zur Befestigung des gesamten Gerüsts mit einem Gegenstand unterhalb des Gerüsts verbunden werden kann. Hierzu sieht der Bereich 11 in der speziellen Ausführungsform eine schlitzförmige (im Wesentlichen U-förmige) Aussparung 20 vor, die breit genug ist, damit sich der Schaft einer Befestigungsschraube von oben nach unten durch die Aussparung 20 erstrecken kann.

Das in Fig. 7 dargestellte andere erste Verbindungselement 2 weist den bereits erwähnten Bereich 25 auf, mit dem es an dem ersten Profilelement 4, 5 befestigt wird. Der Bereich 25 geht in einen dazu abgewinkelt verlaufenden Bereich 24 über, der wie auch der Bereich 14 des anderen ersten Verbindungselements 1 vertikal von oben nach unten verläuft. Der Bereich 24 geht in einen schräg nach unten verlaufenden Bereich 22, 23 über, welcher wiederum zu einem Befestigungsbereich 21 abknickt. Der Befestigungsbereich 21 weist wie auch der Befestigungsbereich 11 eine schlitzförmige Aussparung 20 auf, die dieselbe Form wie die schlitzförmige Aussparung 20 in dem Befestigungsbereich 11 hat. In der (am besten in Fig. 1 erkennbaren) montierten Position der beiden ersten Verbindungselemente 1, 2 liegen die Aussparungen 20 der Befestigungsbereich 11, 21 miteinander fluchtend übereinander, so dass eine entsprechende Befestigungsschraube sich in ihrer Längsrichtung von oben nach unten zunächst durch die Aussparung 20 des Befestigungsbereichs 21 und dann durch die unmittelbar benachbarte Aussparung 20 des Befestigungsbereichs 11 hindurcherstrecken kann.

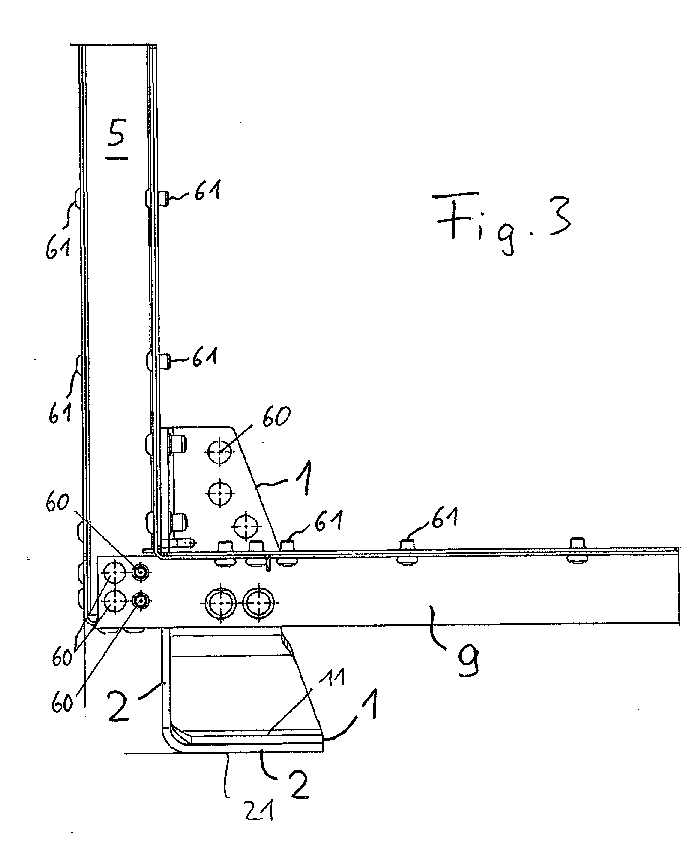

Da die ersten Verbindungselemente 1, 2 verschiedene Abwinkelungen und schräg von oben nach unten verlaufende Bereiche 12, 13, 22, 23 aufweisen, ist die Lage der Aussparungen 20 gegenüber der Längsachse des ersten Profilelements 4, 5 versetzt, d.h. die Aussparungen 20 liegen nicht in Verlängerung des ersten Profilelements 4, 5 (wie z.B. auch Fig. 3 zeigt), sondern parallel zur Längsrichtung des zweiten Profilelements 6, 9 versetzt. Wie die Fig. 2 bis 5 zeigen, befinden sich die Befestigungsbereiche 11, 21 unterhalb des zweiten Profilelements 6, 9 und unterhalb des dritten Profilelements 7, 8. Dadurch ist die Montage des Gerüsts erleichtert. Der Abstand zwischen den Befestigungsbereichen 11, 21 und dem zweiten Profilelement 6, 9 ist groß genug, um z.B. mit einem Werkzeug einen oberhalb des Befestigungsbereichs 11 positionierten Schraubenkopf festhalten zu können.

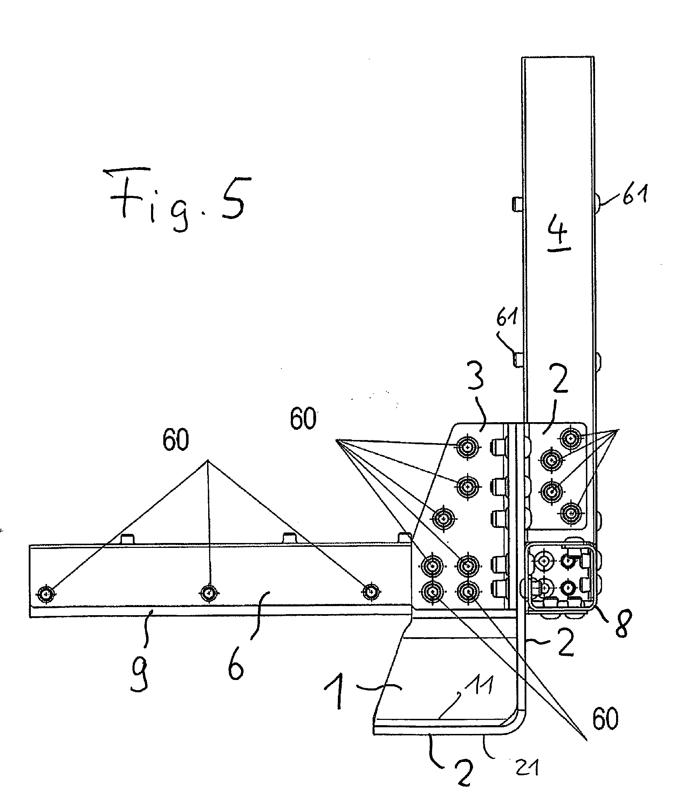

Wie am besten Fig. 1 zeigt, ist ein zweites Verbindungselement 3 sowohl mit dem einen ersten Verbindungselement 1 als auch mit dem anderen ersten Verbindungselement 2 vernietet. Das ebenfalls in Fig. 8 dargestellte zweite Verbindungselement 3 weist zwei plattenförmige Bereiche 31, 32 auf, die durch Abkanten eines Bleches hergestellt worden sind. Der erste plattenförmige Bereich 31 ist mit dem Bereich 24 des anderen ersten Verbindungselements 2 über sieben Niete vernietet. Der zweite plattenförmige Bereich 32 ist über sieben Niete mit dem Bereich 14 des einen ersten Verbindungselements 1 vernietet. Dabei befestigen jeweils vier der Nieten den plattenförmigen Bereich 31, 32 über den Bereich 24 bzw. 14 mit dem dritten Profilelement 7, 8 bzw. mit dem zweiten Profilelement 6, 9 (Fig. 2 und Fig. 5).

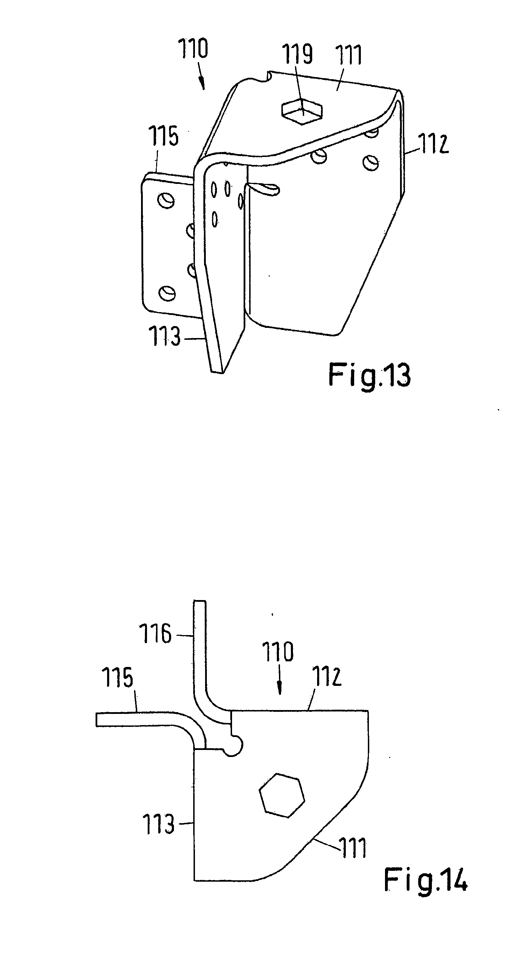

Fig. 13 und Fig. 14 zeigen ein alternatives Verbindungselement 110, das die Funktionen der beiden ersten Verbindungselemente 1, 2 gemäß Fig. 1 bis Fig. 9 und des zweiten Verbindungselements 3 gemäß Fig. 1 bis Fig. 9 in sich vereint. Das Verbindungselement 110 weist einen Befestigungsbereich 111 mit einer sechskantförmigen Durchgangsöffnung 119 auf, um den Befestigungsbereich 111 mit entsprechenden Befestigungsmitteln an anderen Gegenständen befestigen zu können und damit das gesamte Gerüst zu fixieren. Ausgehend von dem Befestigungsbereich 111 erstrecken sich zwei abgewinkelt dazu von oben nach unten verlaufende Bereiche 112, 113. An den Bereichen 112, 113 setzt jeweils ein wiederum dazu abgewinkelter Bereich 115 bzw. 116 an (wie am besten die Draufsicht von Fig. 14 zeigt), so dass die Bereiche 115, 116 zwar nicht unmittelbar miteinander verbunden sind, jedoch abgewinkelt zueinander verlaufen.

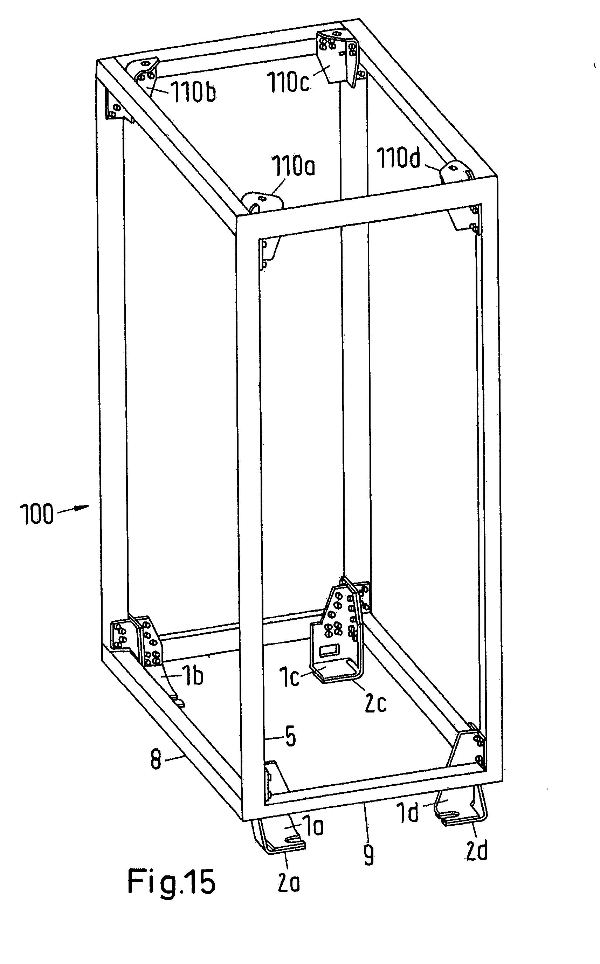

Um die ersten und zweiten Verbindungselemente z.B. in der in Fig. 1 dargestellten Ausführungsform zu ersetzen, können die Bereiche 115, 116 anstelle der Bereiche 15, 25 mit dem ersten Profilelement 4, 5 vernietet werden und die Bereiche 112, 113 anstelle der Bereiche 14, 24 mit dem zweiten Profilelement 6, 9 bzw. dem dritten Profilelement 7, 8 vernietet werden. Allerdings wird es (wie Fig. 15 zeigt) bevorzugt, dass nicht die unteren Ecken des Gerüsts 100, sondern die oberen Ecken jeweils mit einem Exemplar des Verbindungselements 110 versehen werden. Zumindest drei der unteren Ecken sind vorzugsweise wie in Fig. 1 bis Fig. 9 dargestellt ausgestaltet oder teilweise mit spiegelverkehrt geformten ersten Verbindungselementen versehen. Die unten links im Vordergrund der Fig. 15 dargestellte Gerüstecke ist z.B. wie in Fig. 1 dargestellt ausgestaltet. Dagegen ist die rechts vorne im Vordergrund von Fig. 15 dargestellte Gerüstecke mit spiegelverkehrten Verbindungselementen 1 d, 2d versehen. Die Verbindungselemente 1 a, 2a der links vorne in Fig. 15 dargestellten Gerüstecke sind z.B. die Verbindungselemente 1, 2 gemäß Fig. 1. Die links hinten in Fig. 15 dargestellte Gerüstecke und die rechts hinten in Fig. 15 dargestellte Gerüstecke können Verbindungselemente 1 b, 1 c, 2c aufweisen, die anders ausgestaltet sind.

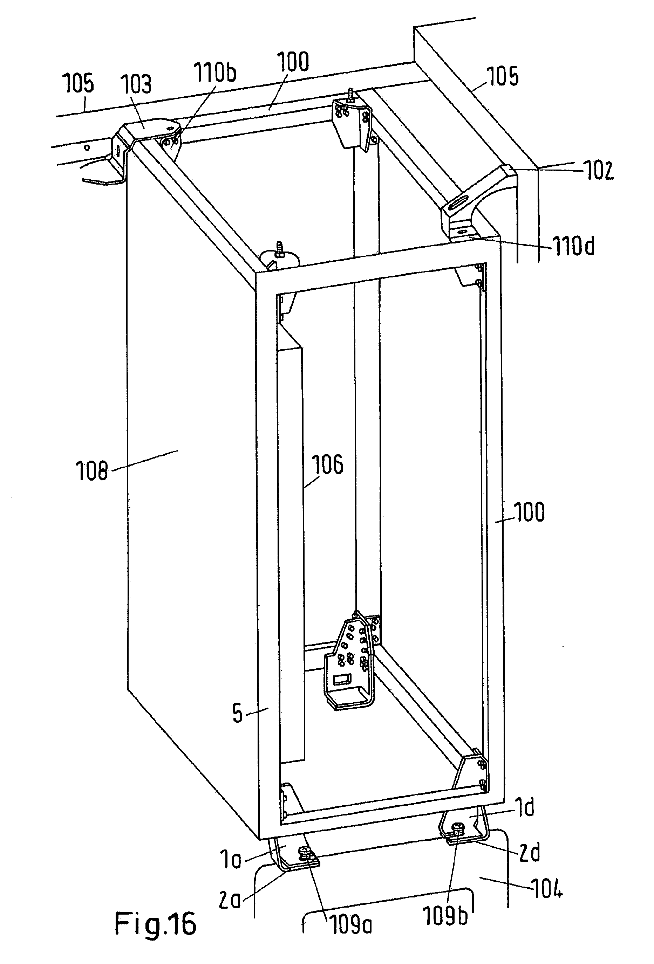

Fig. 16 zeigt ein erfindungsgemäßes Gerüst, z. B. das Gerüst gemäß Fig. 15. Die oben rechts vorne liegende Gerüstecke ist über das Verbindungselement 110d an einem brückenförmigen Verbindungsteil 102 befestigt, z. B. mit dem Teil 102 verschraubt. Das Verbindungsteil 102 ist wiederum an einer tragenden Konstruktion 105 eines Schienenfahrzeugs befestigt.

Die oben links hinten liegende Gerüstecke ist über ihr Verbindungselement 110b an einem weiteren Verbindungsteil 103 befestigt, das wiederum ebenfalls an der tragenden Konstruktion 105 befestigt ist.

Links im Bild erkennt man, dass an dem Gerüst 100 eine Seitenwand 108 befestigt sein kann, so dass das Gerüst 100 zumindest an einer Seite in der Art eines Gehäuses geschlossen werden kann. Ein im Innenraum des Gerüsts 100 angeordnetes zusätzliches Profil 106 dient z. B. der Anbringung von elektrischen Einrichtungen, die in Fig. 16 jedoch nicht dargestellt sind.

Die unten links vorne und rechts vorne liegenden Gerüstecken sind über ihre Verbindungselemente 1 a, 2a; 1 d, 2d mit einer weiteren tragenden Konstruktion 104 des Schienenfahrzeugs verschraubt. Die Schrauben 109a, 109b, die sich durch die schlitzförmigen Aussparungen (ähnlich den Aussparungen 20 gemäß Fig. 1) hindurch erstrecken, sind dargestellt.

## Patentansprüche

1. Gerüst (100), insbesondere für elektrische Einrichtungen in einem Schienenfahrzeug, wobei:
- das Gerüst (100) eine Mehrzahl von langgestreckten Profilelementen (4, 5; 6, 9; 7, 8) aufweist,
- die Profilelemente (4, 5; 6, 9; 7, 8) eine tragfähige Konstruktion, insbesondere für die elektrischen Einrichtungen, bilden,
- an Ecken des Gerüstes (100) jeweils zumindest drei der Profilelemente (4, 5; 6, 9; 7, 8) miteinander verbunden sind,
- die drei Profilelemente (4, 5; 6, 9; 7, 8) an zumindest einer der Ecken des Gerüstes (100) über ein erstes (1, 2) Verbindungselement miteinander verbunden sind,
- das erste Verbindungselement (1, 2) am Endbereich eines ersten der drei Profilelemente (4, 5; 6, 9; 7, 8) befestigt ist und sich ausgehend von dem Endbereich des ersten Profilelementes (4, 5) entlang der Oberfläche zumindest eines anderen (6, 9; 7, 8) der Profilelemente (4, 5; 6, 9; 7, 8) erstreckt, d.h. sich entlang der Oberfläche des zweiten (6, 9) und/oder dritten (7, 8) Profilelements erstreckt,
**dadurch gekennzeichnet, dass**
- die drei Profilelemente (4, 5; 6, 9; 7, 8) an der Ecken des Gerüstes (100) über zumindest das erste (1, 2) Verbindungselement und ein zweites (3) Verbindungselement miteinander verbunden sind,
- das zweite Verbindungselement (3) mit dem zweiten (6, 9) und dritten (7, 8) Profilelement und mit dem ersten Verbindungselement (1, 2) verbunden ist und
- das erste (1, 2) und/oder zweite (3) Verbindungselement als Befestigungselement zur Befestigung des Gerüstes (100) mit einem anderen Gegenstand ausgestaltet ist, insbesondere zur Befestigung des Gerüstes (100) über das erste und/oder zweite Verbindungselement an tragenden Teilen des Schienenfahrzeugs.

2. Gerüst nach Anspruch 1, wobei die Verbindung des ersten Verbindungselementes (1, 2) am Endbereich des ersten Profilelementes (4, 5), die Verbindung des zweiten Verbindungselementes (3) mit dem zweiten (6, 9) und dritten (7, 8) Profilelement und die Verbindung des zweiten Verbindungselementes (3) mit dem ersten Verbindungselement (1, 2) als Nietverbindungen ausgestaltet sind.

3. Gerüst nach Anspruch 1 oder 2, wobei das erste Verbindungselement (1, 2) im Bereich der Oberfläche des zweiten (6, 9) und/oder dritten (7, 8) Profilelementes, an der sich das erste Verbindungselement (1, 2) entlang erstreckt, mit dem zweiten (6, 9) und/oder dritten (7, 8) Profilelement verbunden ist.

4. Gerüst nach einem der Ansprüche 1 bis 3, wobei zwei der ersten Verbindungselemente (1, 2) vorgesehen sind, die am Endbereich eines ersten der drei Profilelemente (4, 5; 6, 9; 7, 8) befestigt sind und sich ausgehend von dem Endbereich des ersten Profilelementes (4, 5) entlang der Oberfläche des zweiten (6, 9) und/oder dritten (7, 8) Profilelements erstrecken, wobei das zweite Verbindungselement (3) mit beiden ersten Verbindungselementen (1, 2) verbunden ist.

5. Gerüst nach einem der Ansprüche 1 bis 3, wobei das erste Verbindungselement (1, 2) an zwei gegeneinander abgewinkelten Oberflächenbereichen des ersten Profilelements (4, 5) anliegt und mit dem ersten Profilelement (4, 5) verbunden ist.

6. Gerüst nach einem der Ansprüche 1 bis 5, wobei das zweite Verbindungselement (3) über einen plattenförmigen Bereich (14, 24) des ersten Verbindungselementes (1, 2) mit dem zweiten (6, 9) oder dritten (7, 8) Profilelement verbunden ist.

7. Schienenfahrzeug, insbesondere Lokomotive oder Triebfahrzeug, aufweisend ein Gerüst (100) nach einem der Ansprüche 1 bis 6, wobei elektrische Einrichtungen des Schienenfahrzeuges von dem Gerüst (100) getragen werden und wobei das erste (1, 2) und/oder zweite (3) Verbindungselement als Befestigungselement zur Befestigung des Gerüstes (100) ausgestaltet und das Gerüst (100) über das erste (1, 2) und/oder zweite (3) Verbindungselement mit tragenden Teilen eines Wagenkastens des Schienenfahrzeugs verbunden ist.

8. Verfahren zum Herstellen eines Gerüstes (100), insbesondere eines Gerüstes (100) für elektrische Einrichtungen in einem Schienenfahrzeug, mit folgenden Schritten:
- Bereitstellen einer Mehrzahl von langgestreckten Profilelementen (4, 5; 6, 9; 7, 8),
- Bilden einer tragfähigen Konstruktion, insbesondere für die elektrischen Einrichtungen, aus den Profilelementen (4, 5; 6, 9; 7, 8),
- Verbinden von jeweils zumindest drei der Profilelemente (4, 5; 6, 9; 7, 8) an Ecken des Gerüstes (100) miteinander, wobei die drei Profilelemente (4, 5; 6, 9; 7, 8) an zumindest einer der Ecken des Gerüstes (100) über ein erstes (1, 2) Verbindungselement miteinander verbunden werden,
- Befestigen des ersten Verbindungselementes (1, 2) am Endbereich eines ersten der drei Profilelemente (4, 5; 6, 9; 7, 8), sodass sich das erste Verbindungselement (1, 2) ausgehend von dem Endbereich des ersten Profilelementes (4, 5) entlang der Oberfläche zumindest eines anderen (6, 9; 7, 8) der Profilelemente (4, 5; 6, 9; 7, 8) erstreckt, d.h. sich entlang der Oberfläche des zweiten (6, 9) und/oder dritten (7, 8) Profilelements erstreckt,
**gekennzeichnet durch**
- Verbinden der drei Profilelemente (4, 5; 6, 9; 7, 8) miteinander an der Ecke des Gerüstes (100) zumindest über das erste (1, 2) Verbindungselement und ein zweites (3) Verbindungselement,
- Verbinden des zweiten Verbindungselementes (3) mit dem zweiten (6, 9) und dritten (7, 8) Profilelement,
- Verbinden des zweiten Verbindungselementes (3) mit dem ersten Verbindungselement (1, 2) und
- Ausgestalten des ersten (1, 2) und/oder zweiten (3) Verbindungselementes als Befestigungselement zur Befestigung des Gerüstes (100) mit einem anderen Gegenstand, insbesondere zur Befestigung des Gerüstes (100) über das erste (1, 2) und/oder zweite (3) Verbindungselement an tragenden Teilen des Schienenfahrzeugs.

9. Verfahren nach Anspruch 8, wobei die Verbindung des ersten Verbindungselementes (1, 2) am Endbereich des ersten Profilelementes, die Verbindung des zweiten Verbindungselementes (3) mit dem zweiten (6, 9) und dritten (7, 8) Profilelement und die Verbindung des zweiten Verbindungselementes (3) mit dem ersten Verbindungselement (1, 2) als Nietverbindungen ausgestaltet werden.

10. Verfahren nach Anspruch 8 oder 9, wobei das erste Verbindungselement (1, 2) im Bereich der Oberfläche des zweiten (6, 9) und/oder dritten (7, 8) Profilelementes, an der sich das erste Verbindungselement (1, 2) entlang erstreckt, mit dem zweiten (6, 9) und/oder dritten (7, 8) Profilelement verbunden wird.

11. Verfahren nach einem der Ansprüche 8 bis 10, wobei zwei der ersten Verbindungselemente (1, 2) vorgesehen werden, die am Endbereich eines ersten der drei Profilelemente (4, 5; 6, 9; 7, 8) befestigt werden und sich ausgehend von dem Endbereich des ersten Profilelementes (4, 5) entlang der Oberfläche des zweiten (6, 9) und/oder dritten (7, 8) Profilelements erstrecken, wobei das zweite Verbindungselement (3) mit beiden ersten Verbindungselementen (1, 2) verbunden wird.

12. Verfahren nach einem der Ansprüche 8 bis 10, wobei das erste Verbindungselement (1, 2) an zwei gegeneinander abgewinkelten Oberflächenbereichen des ersten Profilelements (4, 5) angelegt wird und mit dem ersten Profilelement (4, 5) verbunden wird.

13. Verfahren nach einem der Ansprüche 8 bis 12, wobei das zweite Verbindungselement (3) über einen plattenförmigen Bereich (14, 24) des ersten Verbindungselementes (1, 2) mit dem zweiten (6, 9) oder dritten (7, 8) Profilelement verbunden wird.

14. Verfahren nach einem der Ansprüche 8 bis 13, wobei das Gerüst (100) über das erste (1, 2) und/oder zweite (3) Verbindungselement mit tragenden Teilen eines Wagenkastens des Schienenfahrzeugs verbunden wird.

## Claims

1. Frame (100), in particular for electrical devices in a rail vehicle, wherein:
- the frame (100) has a plurality of elongated profile elements (4, 5; 6, 9; 7, 8),
- the profile elements (4, 5; 6, 9; 7, 8) form a load-bearing construction, in particular for the electrical devices,
- at least three of the profile elements (4, 5; 6, 9; 7, 8) are connected to one another at respective corners of the frame (100),
- the three profile elements (4, 5; 6, 9; 7, 8) are connected to one another at at least one of the corners of the frame (100) by a first (1, 2) connecting element,
- the first connecting element (1, 2) is fastened to the end region of a first of the three profile elements (4, 5; 6, 9; 7, 8) and, based on the end region of the first profile element (4, 5), extends along the surface of at least one other (6, 9; 7, 8) of the profile elements (4, 5; 6, 9; 7, 8), i.e. extends along the surface of the second (6, 9) and/or third (7, 8) profile element,
**characterised in that**,
- the three profile elements (4, 5; 6, 9; 7, 8) are connected to one another at the corner of the frame (100) by at least the first (1, 2) connecting element and a second (3) connecting element,
- the second connecting element (3) is connected to the second (6, 9) and third (7, 8) profile element and to the first connecting element (1, 2), and
- the first (1, 2) and/or second (3) connecting element is set up as a fastening element for fastening the frame (100) to another object, in particular for fastening the frame (100) to load-bearing sections of the rail vehicle by the first and/or second connecting element.

2. Frame according to claim 1, wherein the connection of the first connecting element (1, 2) is set up as rivet connections at the end region of the first profile element (4, 5), the connection of the second connecting element (3) being with the second (6, 9) and third (7, 8) profile element, and the connection of the second connecting element (3) being with the first connecting element (1, 2).

3. Frame according to claim 1 or 2, wherein the first connecting element (1, 2) is connected to the second (6, 9) and/or third (7, 8) profile element in the region of the surface of the second (6, 9) and/or third (7, 8) profile element, along which the first connecting element (1, 2) extends.

4. Frame according to one of claims 1 to 3, wherein two of the first connecting elements (1, 2) are provided, which are attached to the end region of a first of the three profile elements (4, 5; 6, 9; 7, 8) and which extend along the surface of the second (6, 9) and/or third (7, 8) profile element, based on the end region of the first profile element (4, 5), wherein the second connecting element (3) is connected to both first connecting elements (1, 2).

5. Frame according to one of claims 1 to 3, wherein the first connecting element (1, 2) rests against two surface regions of the first profile element (4, 5), which are bent away from one another, and is connected to the first profile element (4, 5).

6. Frame according to one of claims 1 to 5, wherein the second connecting element (3) is connected to the second (6, 9) or third (7, 8) profile element via a plate-shaped region (14, 24) of the first connecting element (1, 2).

7. Rail vehicle, in particular locomotive or traction vehicle, having a frame (100) according to one of claims 1 to 6, wherein electrical devices of the rail vehicle are borne by the frame (100), and wherein the first (1, 2) and/or second (3) connecting element is set up as a fastening element for fastening the frame (100) and the frame (100) is connected to load-bearing sections of a coach body of the rail vehicle by the first (1, 2) and/or second (3) connecting element.

8. Method for producing a frame (100), in particular a frame (100) for electrical devices in a rail vehicle, having the following steps:
- preparing a plurality of elongated profile elements (4, 5; 6, 9; 7, 8),
- forming a load-bearing construction, in particular for the electrical devices, from the profile elements (4, 5; 6, 9; 7, 8).
- connecting at least three of the profile elements (4, 5; 6, 9; 7, 8) to one another at respective edges of the frame (100), wherein the three profile elements (4, 5; 6, 9; 7, 8) are connected to one another at at least one of the corners of the frame (100) by a first (1, 2) connecting element,
- fastening the first connecting element (1, 2) to the end region of a first of the three profile elements (4, 5; 6, 9; 7, 8), such that the first connecting element (1, 2) extends along the surface of at least one other (6, 9; 7, 8) of the profile elements (4, 5; 6, 9; 7, 8), based on the end region of the first profile element (4, 5), i.e. extends along the surface of the second (6, 9) and/or third (7, 8) profile element,
**characterised by**
- connecting the three profile elements (4, 5; 6, 9; 7, 8) to one another at the corner of the frame (100), at least by the first (1, 2) connecting element and a second (3) connecting element,
- connecting the second connecting element (3) to the second (6, 9) and third (7, 8) profile element,
- connecting the second connecting element (3) to the first connecting element (1, 2) and
- setting up the first (1, 2) and/or second (3) connecting element as a fastening element for fastening the frame (100) to another object, in particular for fastening the frame (100) to load-bearing sections of the rail vehicle by the first (1, 2) and/or second (3) connecting element.

9. Method according to claim 8, wherein the connection of the first connecting element (1, 2) is set up as rivet connections at the end region of the first profile element, the connection of the second connecting element (3) being with the second (6, 9) and third (7, 8) profile element and the connection of the second connecting element (3) being with the first connecting element (1, 2).

10. Method according to claim 8 or 9, wherein the first connecting element (1, 2) is connected to the second (6, 9) and/or third (7, 8) profile element in the region of the surface of the second (6, 9) and/or third (7, 8) profile element, along which the first connecting element (1, 2) extends.

11. Method according to one of claims 8 to 10, wherein two of the first connecting elements (1, 2) are provided, which are attached to the end region of a first of the three profile elements (4, 5; 6, 9; 7, 8) and which extend along the surface of the second (6, 9) and/or third (7, 8) profile element, based on the end region of the first profile element (4, 5), wherein the second connecting element (3) is connected to both first connecting elements (1, 2).

12. Method according to one of claims 8 to 10, wherein the first connecting element (1, 2) rests against two surface regions of the first profile element (4, 5), which are bent away from one another, and is connected to the first profile element (4, 5).

13. Method according to one of claims 8 to 12, wherein the second connecting element (3) is connected to the second (6, 9) or third (7, 8) profile element by a plate-shaped region (14, 24) of the first connecting element (1, 2).

14. Method according to one of claims 8 to 13, wherein the frame (100) is connected to load-bearing sections of a coach body of the rail vehicle by the first (1, 2) and/or second (3) connecting element.

## Revendications

1. Structure (100), en particulier pour des installations électriques dans un véhicule ferroviaire, sachant que :
- la structure (100) présente une pluralité d'éléments profilés (4, 5 ; 6, 9 ; 7, 8) allongés,
- les éléments profilés (4, 5 ; 6, 9 ; 7, 8) forment une construction porteuse, en particulier pour les installations électriques,
- respectivement au moins trois des éléments profilés (4, 5 ; 6, 9 ; 7, 8) sont reliés entre eux au niveau d'angles de la structure (100),
- les trois éléments profilés (4, 5 ; 6, 9 ; 7, 8) sont reliés entre eux par l'intermédiaire d'un premier élément d'assemblage (1, 2) au niveau au moins d'un des coins de la structure (100),
- le premier élément d'assemblage (1, 2) est fixé au niveau de la zone d'extrémité d'un des trois éléments profilés (4, 5 ; 6, 9 ; 7, 8) et s'étend le long de la surface d'au moins un autre (6, 9 ; 7, 8) des éléments profilés (4, 5 ; 6, 9 ; 7, 8) en partant de la zone d'extrémité du premier élément profilé (4, 5), en d'autres termes s'étend le long de la surface du deuxième (6, 9) et/ou du troisième (7, 8) élément profilé, **caractérisée en ce que**
- les trois éléments profilés (4, 5 ; 6, 9 ; 7, 8) sont reliés entre eux par l'intermédiaire au moins du premier élément d'assemblage (1, 2) et d'un deuxième élément d'assemblage (3) au niveau des angles de la structure (100),
- le deuxième élément d'assemblage (3) est relié au deuxième (6, 9) et au troisième (7, 8) élément profilé et au premier élément d'assemblage (1, 2) et
- le premier (1, 2) et/ou le deuxième (3) élément d'assemblage sont configurés sous la forme d'un élément de fixation servant à fixer la structure (100) à un autre objet, en particulier servant à fixer la structure (100) à des parties porteuses du véhicule ferroviaire par l'intermédiaire du premier et/ou du deuxième élément d'assemblage.

2. Structure selon la revendication 1, sachant que l'assemblage du premier élément d'assemblage (1, 2) au niveau de la zone d'extrémité du premier élément profilé (4, 5), l'assemblage du deuxième élément d'assemblage (3) au deuxième (6, 9) et au troisième (7, 8) élément profilé et l'assemblage du deuxième élément d'assemblage (3) au premier élément d'assemblage (1, 2) sont configurés sous la forme d'assemblages rivetés.

3. Structure selon la revendication 1 ou 2, sachant que le premier élément d'assemblage (1, 2) est relié au deuxième (6, 9) et/ou au troisième (7, 8) élément profilé dans la zone de la surface du deuxième (6, 9) et/ou du troisième (7, 8) élément profilé, le long de laquelle surface s'étend le premier élément d'assemblage (1, 2).

4. Structure selon l'une quelconque des revendications 1 à 3, sachant que deux des premiers éléments d'assemblage (1, 2) sont prévus, lesquels sont fixés au niveau de la zone d'extrémité d'un des trois éléments profilés (4, 5 ; 6, 9 ; 7, 8) et qui s'étendent le long de la surface du deuxième (6, 9) et/ou du troisième (7, 8) élément profilé en partant de la zone d'extrémité du premier élément profilé (4, 5), sachant que le deuxième élément d'assemblage (3) est relié aux deux premiers éléments d'assemblage (1, 2).

5. Structure selon l'une quelconque des revendications 1 à 3, sachant que le premier élément d'assemblage (1, 2) repose au niveau de deux zones de surfaces montées l'une par rapport à l'autre de manière à former un coude du premier élément profilé (4, 5) et est relié au premier élément profilé (4, 5).

6. Structure selon l'une quelconque des revendications 1 à 5, sachant que le deuxième élément d'assemblage (3) est relié par l'intermédiaire d'une zone (14, 24) en forme de plaque du premier élément d'assemblage (1, 2) au deuxième (6, 9) ou au troisième (7, 8) élément profilé.

7. Véhicule ferroviaire, en particulier locomotive ou véhicule tracteur, présentant une structure (100) selon l'une quelconque des revendications 1 à 6, sachant que des installations électriques du véhicule ferroviaire sont portées par la structure (100) et sachant que le premier (1, 2) et/ou le deuxième (3) élément d'assemblage sont configurés sous la forme d'un élément de fixation aux fins de la fixation de la structure (100) et que la structure (100) est reliée aux parties porteuses d'une caisse du véhicule ferroviaire par l'intermédiaire du premier (1, 2) et/ou du deuxième (3) élément d'assemblage.

8. Procédé servant à fabriquer une structure (100), en particulier une structure (100) pour des installations électriques dans un véhicule ferroviaire, comprenant les étapes suivantes consistant à :
- fournir une pluralité d'éléments profilés (4, 5 ; 6, 9 ; 7, 8) allongés,
- former une construction porteuse, en particulier pour les installations électriques, à partir des éléments profilés (4, 5 ; 6, 9 ; 7, 8),
- assembler entre eux respectivement au moins trois des éléments profilés (4, 5 ; 6, 9 ; 7, 8) au niveau d'angles de la structure (100), sachant que les trois éléments profilés (4, 5 ; 6, 9 ; 7, 8) sont reliés entre eux au niveau au moins d'un des angles de la structure (100) par l'intermédiaire d'un premier (1, 2) élément d'assemblage,
- fixer le premier élément d'assemblage (1, 2) au niveau de la zone d'extrémité d'un des trois éléments profilés (4, 5 ; 6, 9 ; 7, 8) de sorte que le premier élément d'assemblage (1, 2) s'étend le long de la surface d'au moins un autre (6, 9 ; 7, 8) des éléments profilés (4, 5 ; 6, 9 ; 7, 8) en partant de la zone d'extrémité du premier élément profilé (4, 5), en d'autres termes s'étend le long de la surface du deuxième (6, 9) et/ou du troisième (7, 8) élément profilé,
**caractérisé par**
- l'assemblage des trois éléments profilés (4, 5 ; 6, 9 ; 7, 8) entre eux au niveau de l'angle de la structure (100) au moins par l'intermédiaire du premier (1, 2) élément d'assemblage et d'un deuxième (3) élément d'assemblage,
- l'assemblage du deuxième élément d'assemblage (3) au deuxième (6, 9) et au troisième (7, 8) élément profilé,
- l'assemblage du deuxième élément d'assemblage (3) au premier élément d'assemblage (1, 2) et
- la configuration du premier (1, 2) et/ou du deuxième (3) élément d'assemblage sous la forme d'un élément de fixation aux fins de la fixation de la structure (100) à un autre objet, en particulier aux fins de la fixation de la structure (100) par l'intermédiaire du premier (1, 2) et/ou du deuxième (3) élément d'assemblage au niveau de parties porteuses du véhicule ferroviaire.

9. Procédé selon la revendication 8, sachant que l'assemblage du premier élément d'assemblage (1, 2) au niveau de la zone d'extrémité du premier élément profilé, l'assemblage du deuxième élément d'assemblage (3) au deuxième (6, 9) et au troisième (7, 8) élément profilé et l'assemblage du deuxième élément d'assemblage (3) au premier élément d'assemblage (1, 2) sont configurés sous la forme d'assemblages rivetés.

10. Procédé selon la revendication 8 ou 9, sachant que le premier élément d'assemblage (1, 2) est relié au deuxième (6, 9) et/ou au troisième (7, 8) élément profilé, dans la zone de la surface du deuxième (6, 9) et/ou du troisième (7, 8) élément profilé, le long de laquelle s'étend le premier élément d'assemblage (1, 2).

11. Procédé selon l'une quelconque des revendications 8 à 10, sachant que deux des premiers éléments d'assemblage (1, 2) sont prévus, lesquels sont fixés au niveau de la zone d'extrémité d'un des trois éléments profilés (4, 5 ; 6, 9 ; 7, 8) et qui s'étendent le long de la surface du deuxième (6, 9) et/ou du troisième (7, 8) élément profilé en partant de la zone d'extrémité du premier élément profilé (4, 5), sachant que le deuxième élément d'assemblage (3) est relié aux deux premiers éléments d'assemblage (1, 2).

12. Procédé selon l'une quelconque des revendications 8 à 10, sachant que le premier élément d'assemblage (1, 2) est apposé au niveau de deux zones de surface, montées l'une par rapport à l'autre de manière à former un coude, du premier élément profilé (4, 5) et est relié au premier élément profilé (4, 5).

13. Procédé selon l'une quelconque des revendications 8 à 12, sachant que le deuxième élément d'assemblage (3) est relié au deuxième (6, 9) ou au troisième (7, 8) élément profilé par l'intermédiaire d'une zone (14, 24) en forme de plaque du premier élément d'assemblage (1, 2).

14. Procédé selon l'une quelconque des revendications 8 à 13, sachant que la structure (100) est reliée aux parties porteuses d'une caisse du véhicule ferroviaire par l'intermédiaire du premier (1, 2) et/ou du deuxième (3) élément d'assemblage.
